# EUROPEAN PATENT SPECIFICATION

(11) **EP 0 642 863 B1**
(45) Date of publication and mention of the grant of the patent: **06.08.1997**
(21) Application number: 94850156.4
(22) Date of filing: 09.09.1994
(51) Int. Cl.: B23B 51/02

(54) **Drill**
Bohrer
Foret

(30) Priority: 14.09.1993 SE 9302971
(43) Date of publication of application: 15.03.1995
(73) Proprietor: SECO TOOLS AB, S-737 82 Fagersta (SE)
(72) Inventor: Stedt, Robert, S-737 31 Fagersta (SE); Karlsson, Ronny, S-615 31 Valdemarsvik (SE)
(74) Representative: Taquist, Lennart

(56) References cited:
- EP-A- 0 549 548
- CH-A- 665 979
- DE-C- 159 437
- PATENT ABSTRACTS OF JAPAN vol. 15, no. 362 (M-1157) 12 September 1991 & JP-A-03 142 116 (MITSUBISHI MATERIALS CORP.) 17 June 1991

## Description

### Field of the invention

The present invention relates to a drill according to the pre-characterizing part of claim 1 and as known for example from DE-C-159437.

### Description of the prior art

Drills of the type defined above are used for metal cutting and specifically for drilling holes in metallic workpieces. During the metal cutting operation chips are produced at the tip end of the shank of the drill, said chips being formed and transported from the tip end of the shank of the drill to the opposite end of the shank of the drill, said transport taking place in the flutes.

In order to improve the transport of chips in the flutes it is previously known from EP-A-0 549 548 to have an abrupt increase of the cross-sectional area of the portion of the helical flutes that transports the chips compared to the portion of the helical flutes that forms the chips. However, such an increase of the cross-sectional area reduces the velocity of the cutting fluid that carries the chips and this will negatively affect the chip transport. Since material is removed when the cross-sectional area of the flutes is increased the rigidity of the drill is reduced.

From Japanese patent document No. 3-142116 a drill is previously known having flutes with a cross-sectional area that increases in a direction away from the tip of the drill. However, the flutes have partially a helical extension partially a straight extension. This design does not provide an optimum transport of the chips. Also the same reduction of rigidity as for EP-A-0 549 548 applies.

### Objects and characteristics of the invention

The aim of the present invention is to achieve an optimum transport of chips in a drill of the type defined above, said transport being effected by cutting fluid that travels in the flutes and carries the chips while avoiding to reduce the rigidity of the drill. The pumping effect of the flutes is balanced by the decrease of flute length. The aim of the invention is realized by a drill that has been given the characteristics of the appending claims.

### Brief description of the drawings

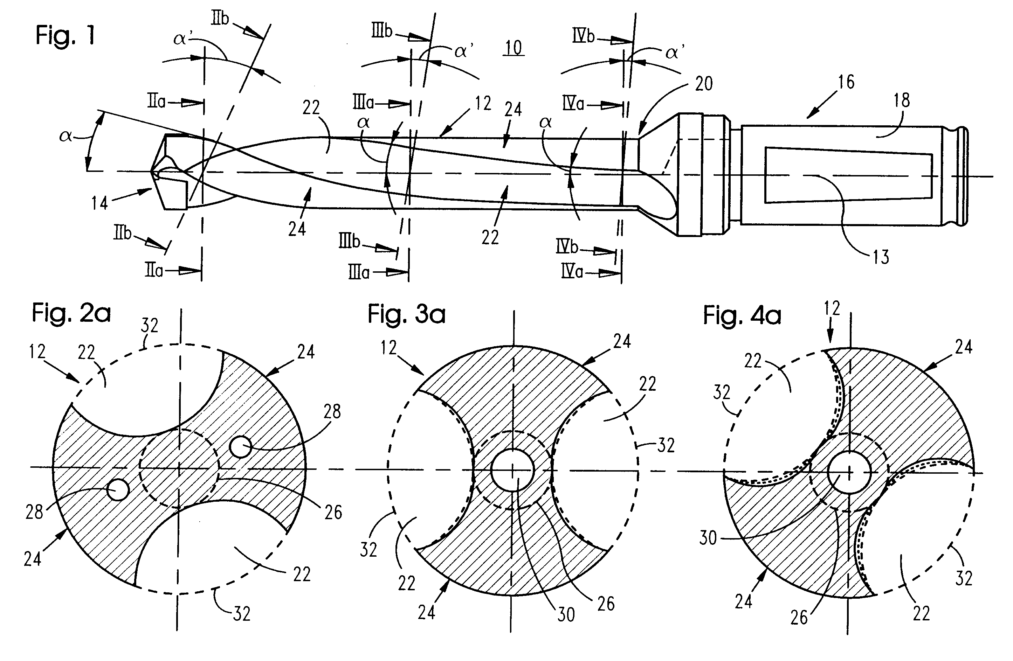

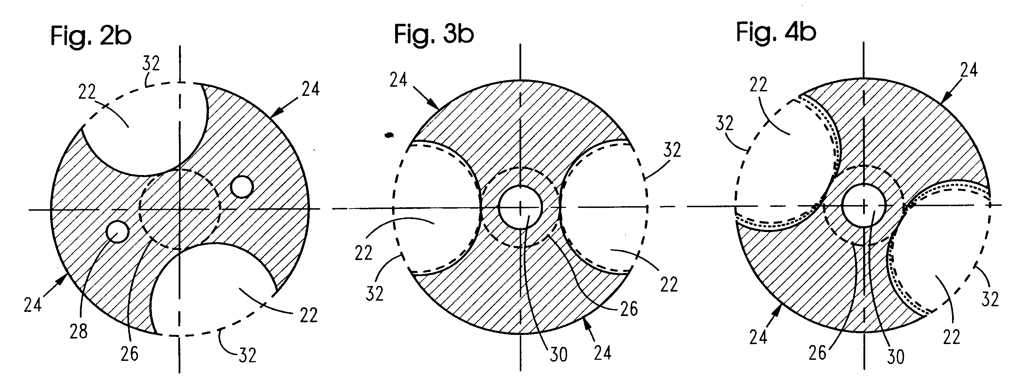

Below an embodiment of the invention will be described, reference being made to the accompanying drawings where Fig.1 shows a side view of a drill according to the present invention; Fig.2a shows a section along IIa-IIa in Fig.1; Fig.3a shows a section along IIIa-IIIa in Fig.1; Fig.4a shows a section along IVa-IVa in Fig.1; Fig.2b shows a section along IIb-IIb in Fig.1; Fig.3b shows a section along IIIb-IIIb in Fig.1; and Fig.4b shows a section along IVb-IVb in Fig.1.

### Detailed description of the preferred embodiment of the invention

The drill 10 according to Fig.1 includes a shank 12 having a longitudinal centre axis 13. The shank 12 has further a first tip end 14 and a second opposite end 16. Even if the described embodiment in the present application relates to a drill having a generally solid shank the scope of the present invention also includes drills having pipe-formed shanks. The expression "generally solid shanks" covers drills having shanks with holes for cutting/cooling fluid in otherwise solid shanks.

At the first tip end 14 the shank 12 is equipped with two cutting edges that either can be brazed to the shank 12, integral with the shank 12 or provided on indexable inserts secured to the shank 12.

At the second end 16 the shank 12 has a thicker portion 18 suitable for insertion into a holder. From the first tip end 14 to an intermediate portion 20 the shank 12 has a generally constant outer diameter.

In the disclosed embodiment two flutes 22 extend helically from the tip end 14 to the intermediate portion 20. When the flutes 22 are machined in the drill blank two lands 24 are created that also extend helically from the tip end 14 to the intermediate portion 20. In the circumferential direction of the shank 12 the lands 24 bridge the flutes 22.

In Fig.1 is also shown how the helix angle α gradually decreases from the tip end 14 to the intermediate portion 20. A typical value for the helix angle α in the region of the tip end 14 is 20° to 25° and a typical value for the helix angle α in the region of the intermediate portion 20 is 10° to 15°.

In Figs.2a-4a are shown cross-sections that lie in planes extending perpendicular to the longitudinal centre line 13 of the shank 12. Thus, the outer contour of said cross-sections is circular. As is clearly shown in Figs.2a-4a there is a web portion 26 in the middle of the shank 12, said web portion 26 having a substantially constant diameter between the tip end 14 and the intermediate portion 20. From the tip end 14 two branch coolant holes 28 extend towards the intermediate portion 20, said holes 28 merging into a centre coolant hole 30 that extends through the entire shank 12, i.e. the centre coolant hole 30 penetrates the end wall of the thicker portion 18.

As can further be seen from Figs.2a-4a the land 24 has a substantially constant circumferential extension in the cross-sections according to Figs.2a-4a, i.e cross-sections lying in a plane perpendicular to the longitudinal centre axis 13. In Fig.3a the walls of the flute 22 of Fig.2a is indicated by broken lines and in Fig.4a the walls of the flute 22 of Fig.2a is indicated by broken lines and the walls of the flute 22 of Fig.3a is indicated by dotted lines. By studying these indication lines of Figs.2a-4a it can be learnt that the cross-sectional area of the flutes 22, i.e. the area defined by the walls of the flute 22 and the broken line 32 (also called open side) bridging the lands 24, increases only marginally, due to machining reasons, in direction from the tip end 14 to the intermediate portion 20. This means that the rigidity of the shank 12 remains in principal the same between the tip end 14 and the intermediate portion 20. In this connection it should be pointed out that with more sophisticated machining methods it is possible to maintain the cross-sectional area of the flutes 22 in Figs.2a-4a constant.

In Figs.2b-4b is shown cross-sections that lie in a plane that forms an angle α' with a plane being perpendicular to the longitudinal centre axis 13. Thus the outer contour of said cross-sections is elliptical. The angle α' is equal to the helix angle α of the flutes 22 in the point where the planes intersect the longitudinal centre axis 13. As has been pointed out above the helix angle α varies in the longitudinal direction of the shank 12.

As can be seen from Figs.2b-4b the cross-sectional area of the flutes 22, i.e. the area defined by the walls of the flute 22 and the broken line 32 bridging the lands 24, increases in direction from the tip end 14 to the intermediate portion 20, i.e. the cross-sectional area of the flute 22 in Fig.2b is the smallest one, the cross-sectional area of the flute 22 in Fig.3b is larger than the one in Fig.2b but smaller than the one in Fig.4b and the cross-sectional area of the flute 22 in Fig.4b is larger than both of the cross-sectional areas of the flute 22 in Fig.2b and in Fig.3b. The cross-sectional area of each flute 22 at full width at the tip end increases 5% ± 2% in direction towards the intermediate portion 20. In Fig.3b the flute 22 in Fig.2 is indicated by broken lines. In Fig.4b the flute in Fig.2b is indicated by broken lines and the flute 22 in Fig.3b is indicated by dotted lines. Thus, there is a gradual increase, from the tip end 14 to the intermediate portion 20, of a cross-section of the flutes 22 that forms an angle α' with a plane that is perpendicular to the longitudinal centre axis 13, said angle α' corresponding to the helix angle α in the area where the planes intersect each other and the longitudinal centre axis 13. By such a design there will be no jamming problems with the cutting fluid and the chips when they travel from the tip end 14 to the intermediate portion 20. At the same time the rigidity of the shaft 12 is in prinicple the same between the end tip 14 and the intermediate portion 20.

From Figs.2b-4b it can be learnt that the increase in cross-sectional area of the flutes 22 is achieved through widening of the open side 32 of the flutes 22. However, within the scope of the present invention it is also possible to further increase the cross-sectional area of the flutes 22 by decreasing the diameter of the web portion 26. In such a case it is necessary to decrease the area of the centre coolant hole 30 in order to maintain a proper rigidity of the drill 10. Thus, the depth of the flutes 22 is determined by a compromise between on the one hand the requirement of rigidity in the shank 12 and on the other hand the desire of spacious flutes 22.

The drill 10 according to the present invention functions in the following way.

The cutting edges of the tip end 14 provide a chip removing machining of a workpiece to create a hole. The removed chips are then forced into the flutes 22 where they are formed into a curled shape. During drilling cutting fluid is fed to the tip end 14 via the centre coolant hole 30 and the branch coolant holes 28. The cutting fluid fed to the tip end 14 is then discharged from the tip end 14 to the intermediate portion 20 via the helical flutes 22. The discharged fluid carries the removed chips that are thus transported towards the intermediate portion 20 of the shank 12. When the cutting fluid discharges from the drilled hole the chips are assembled on the workpiece around the hole.

Since the cross-sectional area of the flutes 22, as seen in Figs.2b-4b, increases in direction from the tip end 14 towards the intermediate portion 20 the velocity of the cutting fluid in axial direction along the shank 12 decreases from the tip end 14 towards the intermediate portion 20 in case the helix angle α had a constant value. Thus, the cutting fluid and the chips will perform a jamming action during its discharge from the tip end 14 to the intermediate portion 20.

In order to compensate for said decrease in velocity the helix angle α, see Fig.1, is decreased in direction from the tip end 14 to the intermediate portion 20. This means that the velocity in axial direction of the shank 12 can be maintained since the distance decreases that the cutting fluid has to travel. Thus as the pumping effect of the flutes decrease with the increase in flute volume the continous decrease of the helix angle will balance said effect and the drill maintains its strength. It is preferable that the flutes 22 have a helical extension all the way from the tip end 14 to the intermediate portion 20 since the helical extension provides a desired pumping effect on the discharge of the cutting fluid that carries the chips. However, within the scope of the present invention it is also possible that the helix angle α becomes zero before the flutes reach the intermediate portion 20.

## Claims

1. Drill (10), preferably for metal cutting, including a substantially solid shank (12) having a first tip end (14), including at least one cutting edge, a second opposite end (16) and an intermediate portion (20) located between the first tip end (14) and the second opposite end (16), a number of flutes (22) corresponding to the number of cutting edges, said flutes (22) extending from the tip end (14) to the intermediate portion (20) of the shank (12), wherein the available volume for cutting fluid travelling in the flutes (22) increases gradually from the tip end (14) towards the intermediate portion (20), **characterized** in that the helix angle (α) of the flutes (22) decreases gradually from the tip end (14) to the intermediate portion (20) and that, in cross-sections (Figs.2a-4a) lying in planes perpendicular to a longitudinal centre axis (13) of the shank (12), lands (24), that bridges the flutes (22), have a substantially constant extension between the flutes (22) in the circumferential direction.

2. Drill according to claims 1,
**characterized** in that in cross-sections (Figs.2b-4b) lying in planes forming an angle (α') with a plane perpendicular to a longitudinal centre axis (13) of the shank (12), the cross-sectional area of the flutes (22) increases in direction from the tip end (14) to the intermediate portion (20), said angle (α') being equal to the helix angle (α) in an area where the perpendicular plane intersects the longitudinal centre axis (13).

3. Drill according to any of claims 1 or 2,
**characterized** in that the shank (12) has a generally constant outer diameter between the tip end (14) and the intermediate portion (20).

4. Drill according to any of the preceding claims,
**characterized** in that the helix angle (α) in the region of the tip end (14) has a value in the magnitude of 20° to 25°.

5. Drill according to any of the preceding claims,
**characterized** in that the helix angle in the region of the intermediate portion (20) has a value in the interval 10° to 15°.

6. Drill according to claim 2,
**characterized** in that the angled cross-sectional area of the flutes (22) is increased by widening the flutes (22) at their open sides (32).

7. Drill according to claim 1,
**characterized** in that the cross-sectional area of each flute (22) increases 5% ± 2% in direction towards the intermediate portion (20).

## Patentansprüche

1. Bohrer (10), vorzugsweise zum Metallschneiden, mit einem im wesentlichem kompakten Schaft (12) mit einem ersten Spitzenende (14), das wenigstens eine Schneidkante einschließt, einem zweiten entgegengesetzten Ende (16) und einem Zwischenabschnitt (20), der zwischen dem ersten Spitzenende (14) und dem zweiten entgegengesetzten Ende (16) angeordnet ist, einer Anzahl von Hohlkehlen (22) entsprechend der Schneidkantenanzahl, wobei sich diese Hohlkehlen (22) von dem Spitzenende (14) zu dem Zwischenabschnitt (20) des Schaftes (12) erstrecken und das verfügbare Volumen für in den Hohlkehlen (22) wandernde Schneidflüssigkeit allmählich von dem Spitzenende (14) zu dem Zwischenabschnitt (20) hin zunimmt, **dadurch gekennzeichnet**, daß der Schrägungswinkel (α) der Hohlkehlen (22) allmählich von dem Spitzenende (14) zu dem Zwischenabschnitt (20) abnimmt und daß in Querschnitten (Fig. 2a bis 4a), die in Ebenen senkrecht zu einer Längsmittelachse (13) des Schaftes (12) liegen, Flächen (24), die die Hohlkehlen (22) miteinander verbrücken, eine im wesentlichen konstante Ausdehnung zwischen den Hohlkehlen (22) in der Umfangsrichtung haben.

2. Bohrer nach Anspruch 1, **dadurch gekennzeichnet**, daß in Querschnitten (Fig. 2b bis 4b), die in Ebenen liegen, welche einen Winkel (α') mit einer Ebene senkrecht zu einer Längsmittelachse (13) des Schaftes (12) bilden, die Querschnittsfläche der Hohlkehlen (22) in Richtung von dem Spitzenende (14) zu dem Zwischenabschnitt (20) zunimmt, wobei dieser Winkel (α') gleich dem Schrägungswinkel (α) in einem Bereich ist, wo die senkrechte Ebene die Längsmittelachse (13) schneidet.

3. Bohrer nach einem der Ansprüche 1 oder 2, **dadurch gekennzeichnet**, daß der Schaft (12) einen allgemein konstanten Außendurchmesser zwischen dem Spitzenende (14) und dem Zwischenabschnitt (20) hat.

4. Bohrer nach einem der vorausgehenden Ansprüche, **dadurch gekennzeichnet**, daß der Schrägungswinkel (α) in dem Bereich des Spitzenende (14) einen Wert in der Größe von 20 bis 25° hat.

5. Bohrer nach einem der vorausgehenden Ansprüche, **dadurch gekennzeichnet**, daß der Schrägungswinkel in dem Bereich des Zwischenabschnittes (20) eine Wert im Bereich von 10 bis 15 ° hat.

6. Bohrer nach Anspruch 2, **dadurch gekennzeichnet**, daß die Querschnittsfläche der Hohlkehlen (22) durch Aufweiten der Hohlkehlen (22) an ihren offenen Seiten (32) zunimmt.

7. Bohrer nach Anspruch 1, **dadurch gekennzeichnet**, daß die Querschnittsfläche einer jeden Hohlkehle (22) um 5 % ± 2 % in Richtung zu dem Zwischenabschnitt (20) hin zunimmt.

## Revendications

1. Foret (10), de préférence pour la coupe de métaux, incluant une tige (12) pratiquement massive comportant une première extrémité en pointe (14), incluant un bord de coupe au moins, une deuxième extrémité opposée (16) et une partie intermédiaire (20) située entre la première extrémité en pointe (14) et la seconde extrémité opposée (16), un certain nombre de rainures (22) correspondant au nombre de bords de coupe, lesdites rainures (22) s'étendant de l'extrémité en pointe (14) à la partie intermédiaire (20) de la tige (12), où le volume disponible pour le fluide de coupe qui se déplace le long des rainures (22) augmente graduellement entre l'extrémité en pointe (14) et la partie intermédiaire (20), caractérisé en ce que l'angle d'hélice (α) des rainures (22) décroît graduellement entre l'extrémité en pointe (14) et la partie intermédiaire (20), et en ce que les crêtes (24) qui séparent les rainures (22), quand on les voit en coupes transversales (Figures 2a à 4a) faites dans des plans perpendiculaires à l'axe central longitudinal (13) de la tige (12), ont une élongation radiale pratiquement constante entre les rainures (22).

2. Foret selon la revendication 1, caractérisé en ce que dans les coupes (Figures 2b à 4b) faites dans des plans formant un angle (α') avec le plan perpendiculaire à l'axe central longitudinal (13) de la tige (12), la surface de la section des rainures (22) augmente entre l'extrémité en pointe (14) et la partie intermédiaire (20), ledit angle (α') étant égal à l'angle d'hélice (α) à l'endroit où le plan perpendiculaire coupe l'axe central longitudinal (13).

3. Foret selon l'une quelconque des revendications 1 ou 2, caractérisé en ce que la tige (12) présente un diamètre externe généralement constant entre l'extrémité en pointe (14) et la partie intermédiaire (20).

4. Foret selon l'une quelconque des revendications précédentes, caractérisé en ce que l'angle d'hélice (α), dans la région de l'extrémité en pointe (14), a une valeur de l'ordre de 20 à 25°.

5. Foret selon l'une quelconque des revendications précédentes, caractérisé en ce que l'angle d'hélice, dans la région de la partie intermédiaire (20), a une valeur comprise entre 10° et 15°.

6. Foret selon la revendication 2, caractérisé en ce que l'on fait croître la surface de la section oblique des rainures (22) en élargissant les rainures (22) sur leurs côtés ouverts (32).

7. Foret selon la revendication 1, caractérisé en ce que la surface de la section de chaque rainure (22) augmente de 5% ± 2% en allant vers la partie intermédiaire (20).
